# EUROPÄISCHE PATENTANMELDUNG

(11) **EP 3 945 294 A1**
(43) Veröffentlichungstag der Anmeldung: **02.02.2022**
(21) Anmeldenummer: 21183186.2
(22) Anmeldetag: 01.07.2021
(51) Int. Cl.: G01F 23/292, G01F 23/02, A01G 27/00

(54) **VORRICHTUNG ZUR WASSERSTANDSANZEIGE**

(30) Priorität: 30.07.2020 DE 102020209637
(71) Anmelder: BSH Hausgeräte GmbH, 81739 München (DE)
(72) Erfinder: Dornik, Primoz, 3270 Lasko (SI); Holcinger, Tadej, 3220 Store (SI); Koell, Martin, 83362 Surberg (DE); Leng, Sascha, 80339 München (DE); Longhino, Werner, 84561 Mehring (DE); Scheffelmeier, Marco, 80687 München (DE); Tan, E-Lin, 85591 Vaterstetten (DE); Terrádez Alemany, Maria, 80469 München (DE)

(57) **Zusammenfassung**

Offenbart ist eine Vorrichtung 1 zur Anzeige eines Wasserstands in einem Behälter 10 eines Haushaltsgeräts. Die Vorrichtung 1 umfasst einen zumindest teilweise lichttransparenten Block, der ein Zackenprofil Z mit einer Mehrzahl an Zacken aufweist.

Offenbart ist zudem ein Behälter 10 eines Haushaltsgeräts. Der Behälter umfasst eine Vorrichtung 1 zur Anzeige eines Wasserstandes im Behälter, die einen zumindest teilweise lichttransparenten Block mit einem eine Mehrzahl an Zacken umfassenden Zackenprofil Z aufweist.

Offenbart ist weiterhin ein Haushaltsgerät 100 mit einem solchen Behälter 10. Das Haushaltsgerät kann insbesondere ein Pflanzenkultivierungssystem sein.

## Beschreibung

Die vorliegende Erfindung betrifft eine Vorrichtung zur Wasserstandsanzeige in einem Behälter eines Haushaltsgeräts, einen Behälter eines Haushaltsgeräts mit einer solchen Vorrichtung und ein Haushaltsgerät (insbesondere ein Pflanzenkultivierungssystem zur Pflanzenkultivierung), das einen solchen Behälter umfasst.

Haushaltsgeräte, insbesondere Haushaltskleingeräte wie beispielsweise Kaffeemaschinen, Wasserkocher oder Pflanzenkultivierungssysteme umfassen üblicherweise einen Wasserbehälter, dessen Inhalt von einem Anwender regelmäßig oder bei Bedarf nachgefüllt wird. Damit der Anwender auch im Falle von undurchsichtigen Behältern einen jeweiligen Füllstand ablesen kann, sind in der Regel Wasserstandsanzeiger in Form einer Schwimmervorrichtung oder eines Sichtfensters am Behälter vorgesehen.

Der vorliegenden Erfindung liegt die Aufgabe zugrunde, eine alternative Technik zum Anzeigen eines Wasserstandes im Behälter eines Haushaltsgeräts bereitzustellen.

Die Aufgabe wird gelöst durch eine Vorrichtung gemäß Anspruch 1, einen Behälter gemäß Anspruch 3 und ein Haushaltsgerät nach Anspruch 9. Vorteilhafte Ausführungsformen sind in den Unteransprüchen, der Beschreibung und den Figuren offenbart.

Eine erfindungsgemäße Vorrichtung dient dazu, einen in einem Behälter eines Haushaltsgeräts (z.B. einer Kaffeemaschine, eines Wasserkochers oder eines Pflanzenkultivierungssystems) jeweils vorliegenden Wasserstand anzuzeigen, insbesondere diesen also einem Anwender kenntlich zu machen, wenn er nicht direkt sichtbar ist.

Die Vorrichtung umfasst einen Block, der zumindest teilweise lichttransparent, also durchlässig für elektromagnetische Strahlung im für den Menschen sichtbaren Spektralbereich (insbesondere durchsichtig) ist. Der Block weist dabei ein Zackenprofil mit einer Mehrzahl an Zacken auf. Die Lichttransparenz ist dabei vorzugsweise zumindest ausgehend von einer dem Zackenprofil entgegengesetzten Seite des Blocks zum Zackenprofil hin (bzw. zurück) gegeben.

Insbesondere wird durch die Zacken jeweils mindestens eine Kante des Blocks ausgebildet. Dabei können die Kanten jeweils gekrümmt sein oder entlang einer jeweiligen Gerade verlaufen. Mehrere (z.B. mindestens zwei, drei oder mehr) der Kanten können vorzugsweise einen konstanten Abstand voneinander haben, im Falle gerader Kanten also zueinander parallel verlaufen. Insbesondere können mehrere der Kanten in einer gemeinsamen Ebene liegen.

Das Zackenprofil ist vorzugsweise an mindestens einer Seite des Blocks angeordnet, es kann beispielsweise eine durch die Zacken profilierte bzw. strukturierte (Seiten-)Fläche des Blocks ausbilden.

Das Zackenprofil kann regelmäßig oder unregelmäßig geformt sein. Vorzugsweise weist es mehrere voneinander abgewinkelte, polierte Oberflächen auf.

Die Zacken können beispielsweise jeweils eine Stufe mit einer (senkrecht zu den genannten Kanten zu messenden) Stufenbreite von mindestens 1mm, mindestens 1,5mm oder mindestens 2mm und/oder höchstens 6mm, höchstens 5mm oder höchstens 4mm ausbilden; Entsprechendes kann (alternativ oder zusätzlich) für eine (senkrecht zu den genannten Kanten und zu den Stufenbreiten zu messenden) Stufenhöhe gelten. Insbesondere können Stufenhöhe und Stufenbreite einer jeweiligen Stufe jeweils gleich sein.

Das in einer erfindungsgemäßen Vorrichtung ausgebildete Zackenprofil ermöglicht eine Reflexion von Licht, das den Block von oberhalb eines jeweiligen Wasserspiegels kommend durchdringt, an einer jeweiligen Zacke, an der der Wasserspiegel gerade steht. Das Licht wird damit am Wasserspiegel wieder nach oben reflektiert. Insbesondere unter Ausnutzung von Totalreflexion kann das reflektiere Licht damit einem Anwender den Wasserstand anzeigen, wobei die Anzeige in Form eines projizierten Lichtreflexes oberhalb des tatsächlichen Wasserspiegels erscheint, insbesondere an einem Sichtfenster des jeweiligen Behälters an einer dem Zackenprofil entgegengesetzten Seite des Blocks. Der Wasserspiegel kann damit in einem nicht oder zumindest schwer einsichtigen Bereich liegen, beispielsweise unterhalb des Sichtfensters. Die Vorrichtung ist dabei einfach herzustellen, besonders robust und auch für komplexe Behälterformen geeignet.

An einer dem Zackenprofil entgegengesetzten Seite kann eine erfindungsgemäße Vorrichtung eine Skala aufweisen. Dadurch können einem Anwender genauere Informationen über den jeweils aktuellen Wasserstand vermittelt werden.

Der lichttransparente Block ist vorzugsweise aus einem homogenen Material. Gemäß vorteilhaften Ausführungsformen ist der lichttransparente Block mindestens teilweise aus (vorzugsweise jeweils klarem) Plexiglas und/oder Kunststoff gebildet, beispielsweise aus glykolmodifiziertem Copolyester, insbesondere PCTG. Damit ist der Block besonders leicht und aufgrund der guten Bearbeitungseigenschaften der genannten Materialien besonders gut herzustellen.

Ein erfindungsgemäßer Behälter eines Haushaltsgeräts dient zur Aufnahme von Wasser; das Wasser kann dabei mit einer oder mehreren weiteren Komponente/n versetzt sein. Der Behälter umfasst eine erfindungsgemäße Vorrichtung gemäß einer der in dieser Schrift offenbarten Ausführungsformen. Die Vorrichtung ist dabei dazu eingerichtet, einen Wasserstand im Behälter anzuzeigen. Vorzugsweise ist sie dabei so angeordnet, dass sie sich zu einer dem Inneren zugewandten Oberfläche eines Bodens des Behälters hin erstreckt, diese beispielsweise berührt. In einer vorgesehenen Verwendungsausrichtung des Behälters können dabei von den Zacken ausgebildete Kanten, wie sie oben beschrieben sind, vorzugsweise jeweils horizontal und damit parallel oder sogar entlang einem möglichen Wasserspiegels verlaufen.

Gemäß vorteilhaften Ausführungsformen der vorliegenden Erfindung läuft das Zackenprofil (bzw. eine wie oben erwähnt durch die Zacken profilierte (Seiten-)Fläche) des Blocks zu dem Boden des Behälters hin, beispielsweise schräg zum Boden. Insbesondere kann das Zackenprofil eine zum Boden hin absteigende Treppen- bzw. Stufenstruktur ausbilden. So kann ein Wasserspiegel abhängig vom jeweiligen Wasserstand an einer der verschiedenen Zacken (bzw. Stufen) anliegen und damit wie oben beschrieben eine Lichtreflexion und damit eine Anzeige des Wasserstandes bewirken.

Der Behälter kann eine teilweise oder vollständig lichttransparente Wandung haben.

Gemäß bevorzugten Ausführungsformen weist der Behälter eine opake (insbesondere mindestens bereichsweise trübe und/oder mindestens bereichsweise lichtundurchlässige) Wandung sowie mindestens ein Sichtfenster auf. Das Sichtfenster ist dabei dazu eingerichtet, Licht, das durch das Sichtfenster in den Behälter einfällt, in die Vorrichtung zur Wasserstandsanzeige (insbesondere in deren lichttransparenten Block) einzukoppeln. Vorzugsweise ist das Sichtfenster mit der Wandung verklebt oder verschweißt, so dass insbesondere Wasser bis zu einem Bereich des Sichtfensters eingefüllt werden kann, ohne dass Wasser zwischen Sichtfenster und Wandung hindurch aus dem Behälter austritt. Gemäß vorteilhaften Ausführungsformen ist das Sichtfenster in einer Ausnehmung (also einer Senke im Behälterrand) oder einer Öffnung (einem Loch) der Wandung angeordnet.

Das Sichtfenster kann mit einer Oberfläche des Blocks der Vorrichtung zur Wasserstandsanzeige verbunden, insbesondere verklebt und/oder verschweißt sein. Alternativ kann das Sichtfenster mindestens zum Teil durch den Block der Vorrichtung zur Wasserstandsanzeige selbst gebildet sein. Sichtfenster und Block sind dann also durch einen gemeinsamen lichtdurchlässigen Monolith gebildet. Auf diese Weise wird eine Inhomogenität bzw. Materialdifferenz zwischen Sichtfenster und Block vermieden, was Licht- und Schärfeverluste vermeidet.

Ein Abschnitt des Blocks kann beispielsweise in eine Ausnehmung oder Öffnung in der Wandung des Behälters eingefasst sein und so das Sichtfenster bilden; vorzugsweise ist der Abschnitt dann in der Ausnehmung bzw. Öffnung verklebt oder verschweißt. Insbesondere kann eine (vorzugsweise mindestens bereichsweise glatte) Oberfläche des Blocks Teil einer Außenoberfläche des Behälters sein.

Im und/oder neben dem Sichtfenster kann der Behälter eine Skala aufweisen. Dadurch können einem Anwender genauere Informationen über den jeweils aktuellen Wasserstand vermittelt werden.

Die opake Wandung kann einen Kragen (also eine Mantelfläche bzw. einen Randstreifen) ausbilden, der sich (vorzugsweise durchgehend) zwischen dem Sichtfenster und dem Boden (bzw. einer Bodenfläche) des Behälters erstreckt,. In einer vorgesehenen Verwendungsausrichtung des Behälters ist dann das Sichtfenster also oberhalb des Kragens angeordnet und durch diesen vom Boden getrennt. Insbesondere kann so Licht durch das Sichtfenster von oben auf einen jeweiligen Wasserspiegel fallen, dort reflektiert und wiederum nach oben zum Sichtfenster oberhalb des Kragens projiziert werden. Eine (senkrecht) vom Boden des Behälters zum Sichtfenster (in vorgesehener Verwendungsausrichtung also vertikal) gemessene Breite des Kragens kann insbesondere mindestens 1,5cm, mindestens 2cm oder mindestens 3cm betragen.

Ausführungsformen mit einem solchen Kragen ermöglichen ein vereinfachtes Ablesen des Wasserstandes, weil dessen Anzeige nicht im Bereich des Kragens mit den oft ungünstigen Lichtverhältnissen erfasst werden muss, sondern im oberhalb des Kragens angeordneten Sichtfenster. Zudem muss der Behälter damit im Bereich des Kragens nicht zugänglich sein, insbesondere kann er von einer Außenvorrichtung wie beispielsweise einem Sockelelement des Haushaltsgeräts umgeben sein.

Ein erfindungsgemäßes Haushaltsgerät umfasst einen erfindungsgemäßen Behälter gemäß einer der in dieser Schrift offenbarten Ausführungsformen. Es kann insbesondere ein Haushaltskleingerät sein, beispielsweise eine Kaffeemaschine, ein Wasserkocher oder ein Pflanzenkultivierungssystem.

Gemäß vorteilhaften Ausführungsformen ist ein erfindungsgemäßer Behälter als Pflanz- und/oder Wasserbehälter zur Verwendung bei der Hydrokultur von Pflanzen, insbesondere bei der hydroponischen Pflanzenkultivierung ausgebildet. Der Behälter kann dabei dazu eingerichtet sein, als Pflanzgefäß direkt Pflanzsubstrat und Pflanzen aufzunehmen, oder er kann einen Kapselhalter zur Aufnahme von Kapseln als Wurzelungsgrundlage für Pflanzen umfassen.

Alternativ kann der Behälter Teil eines erfindungsgemäßen Pflanzenkultivierungssystems sein: Ein als solches ausgebildetes erfindungsgemäßes Haushaltsgerät umfasst neben dem Behälter (mit der erfindungsgemäßen Vorrichtung zur Wasserstandsanzeige) eine Bewässerungsschale für Pflanzen und zum herausnehmbaren Einsetzen in den Behälter. Vorzugsweise umfasst das Pflanzenkultivierungssystem dann zudem eine elektrische Pumpeinheit zum Pumpen von Wasser aus dem Behälter in die Bewässerungsschale. Das Pflanzenkultivierungssystem kann dann weiterhin einen Kapselhalter zum Einsatz in die Bewässerungsschale umfassen.

Gemäß vorteilhaften Ausführungsformen umfasst ein erfindungsgemäßes Pflanzenkultivierungssystem ein Sockelelement, auf dem der Behälter abnehmbar aufzusetzen ist. Das Sockelelement kann insbesondere einen Elektroanschluss umfassen. In entsprechenden Ausführungsformen kann es eine Antriebseinheit für eine Pumpeinheit (wie oben beschrieben) umfassen.

Das Sockelelement kann eine Senke zur Aufnahme des Bodens des Behälters aufweisen. Die vorliegende Erfindung ermöglicht dabei auf die oben beschriebene einfache Art und Weise, dass ein Wasserstand im Behälter abgelesen werden kann, auch wenn er in einem in der Senke eingefassten und damit nicht sichtbaren Bodenbereich des Behälters liegt.

Im Folgenden wird ein bevorzugtes Ausführungsbeispiel der Erfindung anhand zweier Zeichnungen näher erläutert. Es versteht sich, dass einzelne Elemente und Komponenten auch anders kombiniert werden können als dargestellt, und dass reale Größenverhältnisse von den dargestellten abweichen können.

Es zeigt schematisch:
- Figur 1:: eine exemplarische Ausführungsform eines erfindungsgemäßen Pflanzenkultivierungssystems in einer Schnittansicht; und
- Figur 2:: ein Ausführungsbeispiel einer erfindungsgemäßen Vorrichtung zur Wasserstandsanzeige in perspektivischer Ansicht.

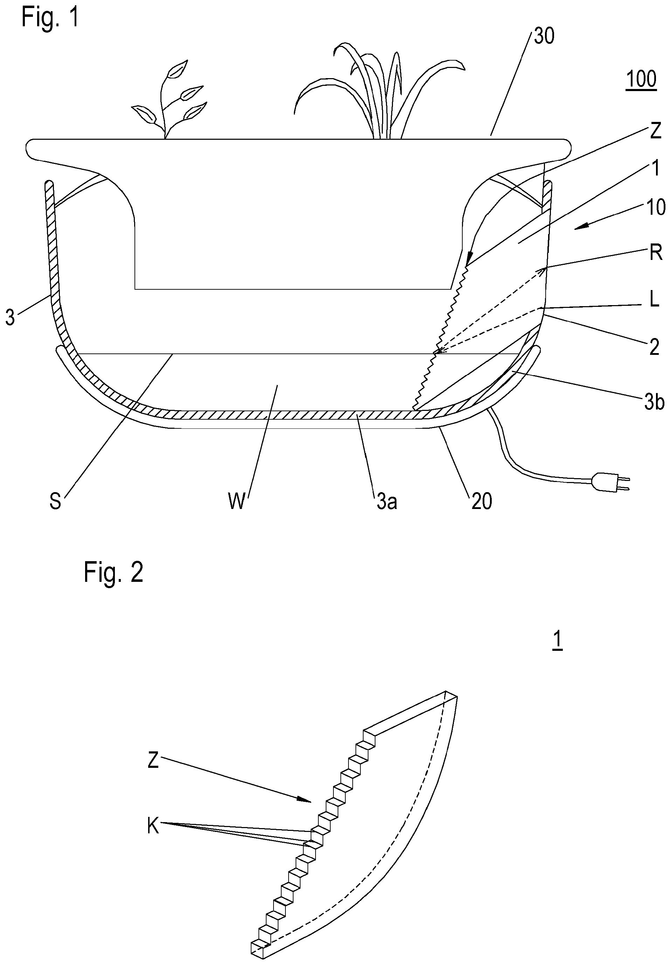

In der Figur 1 ist in einem Querschnitt schematisch ein erfindungsgemäßes Haushaltsgerät in Form eines Pflanzenkultivierungssystems 100 in einer vorgesehenen Verwendungsausrichtung dargestellt. Das Pflanzenkultivierungssystems 100 umfasst einen erfindungsgemäßen Behälter 10, der vorliegend als ein Tankgefäß für das Pflanzenkultivierungssystem ausgebildet ist. Im dargestellten Zustand ist der Behälter 10 auf ein Sockelelement 20 aufgesetzt und enthält eine Bewässerungsschale 30. Sockelelement 20 und Bewässerungsschale 30 gehören jeweils zum Pflanzenkultivierungssystem 100 und sind abnehmbar.

Eine nicht dargestellte Pumpeinheit ist vorzugsweise dazu eingerichtet, Wasser W aus dem Behälter 10 in die Bewässerungsschale 30 zu pumpen, um so Pflanzen, die aus in der Bewässerungsschale angeordneten, in der Figur 1 nicht gezeigten Kapseln wachsen, zu bewässern. Die Pumpeinheit ist dabei mittels eines Elektroanschlusses des Sockelelements 20 anzutreiben.

Der Behälter 10 umfasst eine erfindungsgemäße Vorrichtung 1 zur Wasserstandsanzeige, die einen lichttransparenten Block umfasst (vorliegend sogar insgesamt als ein solcher ausgebildet ist), der an einer Seite ein Zackenprofil Z mit einer Mehrzahl an Zacken aufweist. Ein dem Zackenprofil entgegengesetzter Abschnitt des Blocks ist in eine Wandung 3 des Behälters eingefasst und bildet ein Sichtfenster 2 von außen in das Innere des Behälters 10. Der Block ist also in Richtung vom Sichtfenster 2 zum Zackenprofil Z lichtdurchlässig im für den Menschen sichbaren Spektrum, so dass also Licht L (im Wesentlichen) verlustfrei vom Sichtfenster zum Zackenprofil vordringen kann (und umgekehrt) sowie - jeweils unter geeignetem Einfallswinkel - in das Sichtfenster eindringen bzw. aus dem Zackenprofil austreten kann (und umgekehrt).

Insbesondere sind Sichtfenster und Block somit monolithisch ausgebildet, wodurch eine Inhomogenität bzw. Materialdifferenz zwischen Sichtfenster und Block vermieden wird.

Zwischen einem Boden 3a des Behälters 10 und dem Sichtfenster 2 ist die Wandung 3 in einem Kragen 3b angehoben. Das Sichtfenster 2 ist oberhalb des Kragens 3b angeordnet und wird dadurch nicht vom Sockelelement 20 verdeckt.

Die Vorrichtung 1 zur Wasserstandsanzeige ist in dem Behälter 10 so angeordnet, dass sie sich zu einer dem Inneren zugewandten Oberfläche des Bodens 3a des Behälters 10 hin erstreckt und diesen vorliegend auch berührt.

Wie in der perspektivischen Ansicht der Figur 2 erkennbar ist, werden durch die Zacken des Zackenprofils Z der Vorrichtung 1 zur Wasserstandsanzeige jeweils Kanten K des Blocks ausgebildet, die vorliegend entlang zueinander paralleler Geraden verlaufen. Das Zackenprofil bildet damit eine Treppenstruktur, die in der in Figur 1 gezeigten Ausführungsform zum Boden 3a des Behälters 10 hin absteigt. In der in Figur 1 gezeigten vorgesehenen Verwendungsausrichtung verlaufen die Kanten K horizontal.

Wie in der Figur 1 illustriert ist, wird ein durch das Sichtfenster 2 einfallender Lichtstrahl L dort, wo er auf den Wasserspiegel S trifft, an einem der Zacken des Zackenprofils Z reflektiert und damit zurück zum Sichtfenster 2 geworfen. Dadurch wird ein Lichtreflex R an das Sichtfenster 2 projiziert, der dem jeweils aktuellen Wasserstand entspricht und diesen so anzeigt.

Offenbart ist eine Vorrichtung 1 zur Anzeige eines Wasserstands in einem Behälter 10 eines Haushaltsgeräts. Die Vorrichtung 1 umfasst einen zumindest teilweise lichttransparenten Block, der ein Zackenprofil Z mit einer Mehrzahl an Zacken aufweist.

Offenbart ist zudem ein Behälter 10 eines Haushaltsgeräts. Der Behälter umfasst eine Vorrichtung 1 zur Anzeige eines Wasserstandes im Behälter, die einen zumindest teilweise lichttransparenten Block mit einem eine Mehrzahl an Zacken umfassenden Zackenprofil Z aufweist.

Offenbart ist weiterhin ein Haushaltsgerät 100 mit einem solchen Behälter 10. Das Haushaltsgerät kann insbesondere ein Pflanzenkultivierungssystem sein.

### Bezugszeichen

- 1: Vorrichtung zur Wasserstandsanzeige
- 2: Sichtfenster
- 3: Wandung des Behälters
- 3a: Boden des Behälters
- 3b: Kragen

- 10: Behälter

- 20: Sockelelement

- 30: Bewässerungsschale

- 100: Haushaltsgerät in Form eines Pflanzenkultivierungssystems

- K: Kante
- L: Licht
- R: Lichtreflex
- S: Wasserspiegel
- W: Wasser
- Z: Zackenprofil

## Patentansprüche

1. Vorrichtung (1) zur Wasserstandsanzeige für einen Behälter (10) eines Haushaltsgeräts, wobei die Vorrichtung (1) einen zumindest teilweise lichttransparenten Block umfasst, der ein Zackenprofil (Z) mit einer Mehrzahl an Zacken aufweist.

2. Vorrichtung gemäß Anspruch 1, wobei der lichttransparente Block Plexiglas und/oder Kunststoff, insbesondere glykolmodifizierten Copolyester umfasst.

3. Behälter (10) eines Haushaltsgeräts (100) mit einer Vorrichtung (1) zur Wasserstandsanzeige gemäß einem der Ansprüche 1 oder 2.

4. Behälter gemäß Anspruch 3, wobei das Zackenprofil (Z) der Vorrichtung (1) zur Wasserstandsanzeige schräg zu einem Boden (3a) des Behälters (10) verläuft.

5. Behälter gemäß einem der Ansprüche 3 oder 4, der eine opake Wandung (3) und ein Sichtfenster (2) hat, das dazu eingerichtet ist, durch das Sichtfenster (2) einfallendes Licht (L) in die Vorrichtung (1) zur Wasserstandsanzeige einzukoppeln.

6. Behälter gemäß Anspruch 5, wobei das Sichtfenster (2)
- mindestens zum Teil durch den Block der Vorrichtung (1) zur Wasserstandsanzeige gebildet wird; oder
- mit einer Oberfläche des Blocks der Vorrichtung zur Wasserstandsanzeige verbunden, insbesondere verklebt und/oder verschweißt ist.

7. Behälter gemäß einem der Ansprüche 5 oder 6, wobei die opake Wandung (3) einen Kragen (3b) ausbildet, der sich zwischen dem Sichtfenster (2) und einem Boden (3a) des Behälters (10) erstreckt.

8. Behälter gemäß Anspruch 7, wobei der Kragen (3b) eine vom Boden (3a) des Behälters (10) zum Sichtfenster (2) gemessene Breite aufweist, die mindestens 1,5cm, mindestens 2cm oder mindestens 3cm beträgt.

9. Haushaltsgerät (100) mit einem Behälter (10) gemäß einem der Ansprüche 3 bis 8.

10. Haushaltsgerät (100) gemäß Anspruch 9, das als Pflanzenkultivierungssystem zur Pflanzenkultivierung ausgebildet ist und zudem ein Sockelelement (20) als Untersatz für den Behälter (10) sowie eine Bewässerungsschale (30) für Pflanzen umfasst, die herausnehmbar in den Behälter (10) einzusetzen ist.
